# EUROPEAN PATENT SPECIFICATION

(11) **EP 4 222 463 B1**
(45) Date of publication and mention of the grant of the patent: **25.11.2026**
(21) Application number: 21795208.4
(22) Date of filing: 29.09.2021
(51) Int. Cl.: G01L 1/18, G01B 7/16, G01L 9/00, G01P 15/12

(54) **JUNCTION-ISOLATED SEMICONDUCTOR STRAIN GAUGE**
ÜBERGANGSISOLIERTER HALBLEITER-DEHNUNGSMESSER
JAUGE EXTENSOMÉTRIQUE À SEMI-CONDUCTEUR À ISOLEMENT PAR JONCTION

(30) Priority: 29.09.2020 US 202063084650 P
(43) Date of publication of application: 09.08.2023
(73) Proprietor: Sensata Technologies, Inc., Attleboro, MA 02703 (US)
(72) Inventor: KLAASSE, Gerard, Attleboro, MA 02703 (US); ZWIJZE, Robert, Attleboro, MA 02703 (US); MCKELLAR, Robert, Attleboro, MA 02703 (US); HUO, Shihong, Attleboro, MA 02703 (US); SLOETJES, Jan-Willem, Attleboro, MA 02703 (US)
(74) Representative: Gulde & Partner
(86) International application number: PCT/US2021/052555
(87) International publication number: WO 2022/072428

(56) References cited:
- EP-A1- 1 152 232
- JP-A- H0 972 805
- JP-A- S5 792 870
- US-A1- 2002 003 274
- US-A1- 2004 040 382
- US-A1- 2019 145 842

## Description

### BACKGROUND

Semiconductor strain gauges are widely used through a variety of industries. For example, in the automotive industry, semiconductor strain gauges are used in pressure sensors for applications ranging from brake, transmission, and fuel pressure sensors to occupant weight force sensing. Such pressure sensors typically include silicon strain gauge elements which are glass-bonded to a diaphragm. Wheatstone bridges or other strain gauge configurations are sometimes employed to yield a linear voltage output which is directly proportional to the applied pressure on the diaphragm. The cost and ease of manufacture for these pressure sensors may depend in part on the fabrication method and the configuration of the components of the semiconductor strain gauge.
US 2002/003274 A1 discloses a semiconductor piezoresistive sensor in which a first layer of the first conductivity type is formed (e.g., implanted) on a first side of a substrate and a second layer of a second conductivity type is epitaxially deposited on the first layer. The first layer is surrounded by a sinker diffused region of the first conductivity type which forms a pocket proximate to the deformable member. A resistive element is diffused in the second layer within the pocket, where the resistance of the resistive element changes with stress applied to the deformable member. JP H09 72805 A discloses a semiconductor sensor including a semiconductor substrate having one conductivity type and a conductivity type formed on the semiconductor substrate and different from the semiconductor substrate. The semiconductor sensor changes its output in response to a change in input such as pressure. A signal processing means amplifies the output from a detecting element to a predetermined value. The output is fed back to the detection element, and the output of the detection element after the feedback is amplified by the signal processing means to be a sensor output. EP 1 152 232 A1 discloses a semiconductor pressure sensor that comprises a silicon substrate with a diaphragm that produces a distortion depending on a pressure, strain gauges that are provided on the diaphragm and are formed by diffusion resistors, a PN-junction area which is provided adjacent in the strain gauges and to which the reverse bias is applied. The PN-junction area may comprise the boundary surface between the silicon base and a diffusion layer provided in the silicon base. US 2004/040382 A1 discloses electrical pin lead structure and brazing technique for a sensor to provide a brazed lead that adheres well to a semiconductor substrate while facilitating lateral flexibility without joint fatigue or breakage. The pin lead includes a coil head that is brazed to a silicon layer on a sapphire substrate using a silver-copper-palladium braze material.

### SUMMARY

The invention is set out by the appended set of claims. Apparatuses that include a junction-isolated semiconductor strain gauge and methods for manufacturing a junction-isolated semiconductor strain gauge are disclosed. According to the invention, an apparatus comprises a silicon chip that includes a silicon substrate and a semiconductor strain gauge. The semiconductor strain gauge includes a plurality of resistors formed by locally doping the silicon substrate and biasing the silicon substrate such that the resistors of the plurality of resistors are junction-isolated. The silicon chip may also include a field shield layer to isolate an output signal of the semiconductor strain gauge from external electrical fields. As will be explained below, forming the resistors by locally doping a silicon substrate has many advantages over prior art designs. One of which is that a standard silicon wafer may be used for the substrate instead of a more costly custom substrate that is often required to manufacture semiconductor strain gauge in prior art designs. In addition, applying a field shield layer may have the advantage of isolating the resistors and improving performance of the semiconductor strain gauge. As will be explained below, the semiconductor strain gauge disclosed herein allows for a more minimized design. Minimizing the design of the semiconductor strain gauge may improve mechanical performance, reduce the negative effects of thermal gradients, and reduce the needed package size. Furthermore, a minimized design may also allow for the resistance of the semiconductor strain gauge to more easily be increased, which may be advantageous for low-power applications.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

### BRIEF DESCRIPTION OF THE DRAWINGS

FIG. 1A illustrates an isometric view of an apparatus that includes a junction-isolated semiconductor strain gauge, according to at least one embodiment of the present invention;
FIG. 1B illustrates a more detailed view of the apparatus of FIG. 1A;
FIG. 1C illustrates another view of a portion of the apparatus of FIG. 1A;
FIG. 2 illustrates a graph showing on a membrane, the location of a junction-isolated semiconductor strain gauge of FIG. 1, according to at least one embodiment of the present invention; and
FIG. 3 illustrates a simplified circuit diagram of the junction-isolated semiconductor strain gauge of FIG. 1A.

### DETAILED DESCRIPTION

The terminology used herein for the purpose of describing particular examples is not intended to be limiting for further examples. Whenever a singular form such as "a", "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B, as well as A and B. An alternative wording for the same combinations is "at least one of A and B". The same applies for combinations of more than two elements.

Accordingly, while further examples are capable of various modifications and alternative forms, some particular examples thereof are shown in the figures and will subsequently be described in detail. However, this detailed description does not limit further examples to the particular forms described. Further examples may cover all modifications and alternatives falling within the scope of the appended claims.

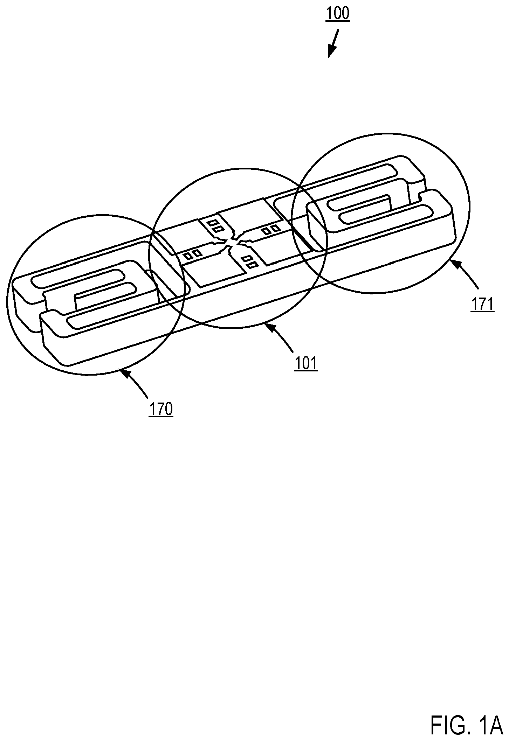

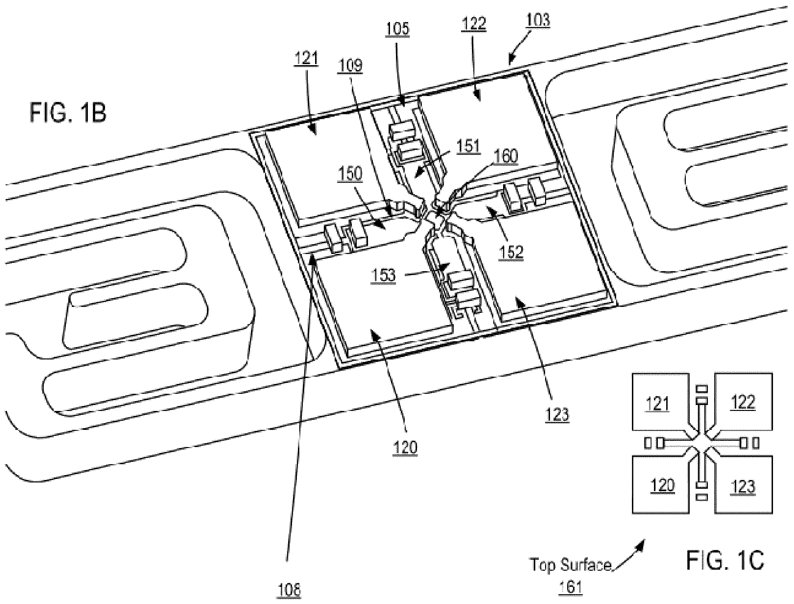

Apparatuses that include a junction-isolated semiconductor strain gauge and methods for manufacturing a junction-isolated semiconductor strain gauge in accordance with the present disclosure are described with reference to the accompanying drawings, beginning with FIG. 1A. For further explanation, FIG. 1A, FIG. 1B, and FIG. 1C each illustrate different views of an apparatus 100 that includes a junction-isolated semiconductor strain gauge 101 on a silicon chip 103, according to at least one embodiment of the present invention.

In the example of FIGs. 1A-C, the silicon chip 103 includes a silicon substrate 105 and the semiconductor strain gauge 101. In a particular embodiment, the silicon chip 103 may be affixed to the top of a diaphragm (not pictured), for example, by an adhesive or glass substrate layer. To monitor the pressure applied to the diaphragm, the semiconductor strain gauge 101 includes a number of sense elements, such as resistors or piezoresistive elements having a resistance that changes in conjunction with the flexing of the diaphragm. This resistance may be calculated, for example, by configuring the semiconductor strain gauge 101 and its components (resistors and bond pads) to form a configuration (e.g., a Wheatstone bridge) which works to generate a voltage output signal that may be relied upon to determine a resistance of one or more resistors of the semiconductor strain gauge 101. That is, in this embodiment, the linear voltage output of the semiconductor strain gauge 101 is directly proportional to the applied pressure on the diaphragm. For example, as pressure is applied to a diaphragm coupled to the semiconductor strain gauge 101, flexure of the diaphragm causes a change in resistance to one or more resistors of the semiconductor strain gauge 101. Continuing with this example, a constant voltage may be input into the semiconductor strain gauge 101, such that a change in resistance of one of the resistors will cause a corresponding change in an output voltage of the semiconductor strain gauge 101. The change in the output voltage may be used to calculate the amount of flexure in the diaphragm. As will be explained further below, the specific configuration of the semiconductor strain gauge 101 of FIGs. 1A-C may offer several advantages over prior art designs.

In the example of FIGs. 1A-C, the semiconductor strain gauge 101 has a plurality of resistors (a first resistor 150, a second resistor 151, a third resistor 152, and a fourth resistor 153) formed by locally doping the silicon substrate 105 and biasing the silicon substrate 105 such that the resistors are junction-isolated. In contrast to forming the resistors by locally doping the silicon substrate and biasing the silicon substrate, prior art designs may rely on forming the resistors by etching a uniformly doped silicon substrate. Because prior art designs often form resistors for a semiconductor strain gauge by etching a uniformly doped silicon substrate, these prior art designs may require special silicon substrates, which may be costly and many times difficult to source. However, forming the resistors by locally doping the silicon substrate 105 in accordance with embodiments of the present invention may allow for the use of industry standard silicon wafers, which are cheap and widely available, thus eliminating the need for these special silicon substrates. For example, a standard silicon wafer may be used for the silicon substrate 105 instead of a more costly custom substrate, as in prior art designs.

In addition to the advantage of using cheaper and easier to source materials, the semiconductor strain gauge 101 of FIGs. 1A-C may be also more compact and minimized than other prior art designs. Minimizing the design of the semiconductor strain gauge may improve mechanical performance, reduce the negative effects of thermal gradients, and reduce the needed package size. Furthermore, a minimized design may also allow for the resistance of the semiconductor strain gauge to more easily be increased, which may be advantageous for low-power applications.

To achieve this minimized design, the resistors of the semiconductor strain gauge 101 are positioned between the bond pads of the silicon chip. For example, the plurality of resistors of the semiconductor strain gauge 101 include the first resistor 150 electrically connected between a first bond pad 120 and a second bond pad 121. The plurality of resistors also include the second resistor 151 electrically connected between the second bond pad 121 and a third bond pad 122. In addition, the plurality of resistors also include the third resistor 152 electrically connected between the third bond pad 122 and a fourth bond pad 123. In this embodiment, the plurality of resistors also include the fourth resistor 153 electrically connected between the fourth bond pad 123 and the first bond pad 120.

In this example embodiment, the first resistor 150 is located on a top surface 161 of the silicon chip 103 between the first bond pad 120, the second bond pad 121, and the center 160 of the top surface 161 of the silicon chip 103. The second resistor 151 is located on the top surface 161 of the silicon chip 103 between the second bond pad 121, the third bond pad 122, and the center 160 of the top surface 161 of the silicon chip 103. In this example embodiment, the third resistor 152 is located on the top surface 161 of the silicon chip 103 between the third bond pad 122, the fourth bond pad 123, and the center 160 of the top surface 161 of the silicon chip 103. According to this embodiment, the fourth resistor 153 is located on the top surface 161 of the silicon chip 103 between the fourth bond pad 123, the first bond pad 120, and the center 160 of the top surface 161 of the silicon chip 103.

In the example of FIGs. 1A-C, the configuration of the resistors (i.e., the first resistor 150, the second resistor 151, the third resistor 152, and the fourth resistor 153) and the bond pads (i.e., the first bond pad 120, the second bond pad 121, the third bond pad 122, and the fourth bond pad 123) form a full Wheatstone bridge. Although the specific configuration of a four pad and two resistor configuration is illustrated in FIGs. 1A-C, other configurations are possible in accordance with one or more embodiments of the present invention. For example, a half-bridge configuration that has three pads and two resistors or a single resistor configuration with two pads and one resistor are also possible. In these alternative examples, the resistors may be positioned between the bond pads to minimize the design and a field shield layer may also be applied to isolate an output signal from electrical fields.

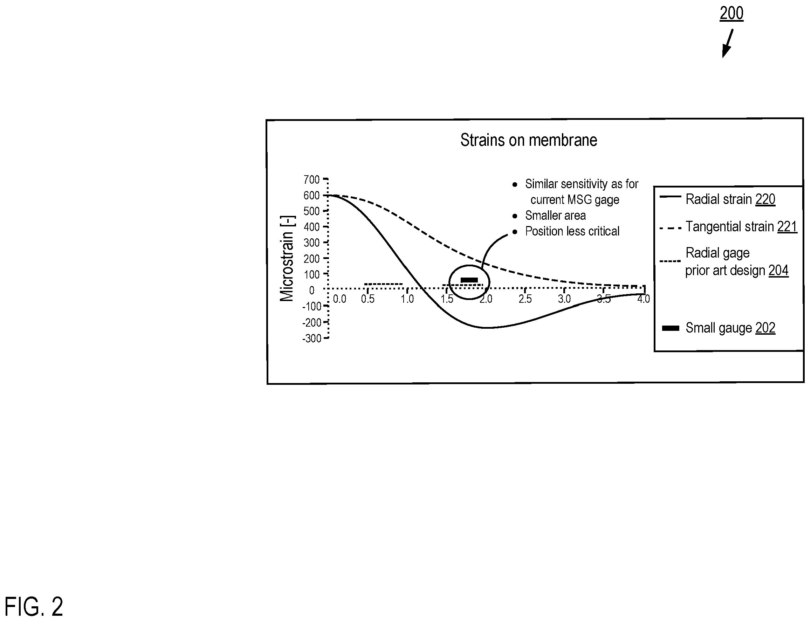

As explained above, this minimized design may allow for more flexible placement of the semiconductor strain gauge on a membrane to be monitored. For example, FIG. 2 illustrates a graph 200 showing on a membrane, the location 202 of a junction-isolated semiconductor strain gauge (also referenced as a "small gauge"), according to at least one embodiment of the present invention. The graph 200 also illustrates the radial strain 220 and the tangential strain 221 on the membrane. The locations 204 of a semiconductor strain gauge of a prior art design is also illustrated to demonstrate that the junction-isolated semiconductor strain gauge 101 has similar sensitivity as a prior art design but occupies a smaller area and the position of the semiconductor strain gauge is less critical than the semiconductor strain gauge of some prior art designs (e.g., the radial prior art gauge whose position on the membrane is shown in FIG. 2).

Returning back to FIGs. 1A-C, the silicon chip 103 is illustrated with a first set of tails 170 and a second set of tails 171 formed from a non-functioning part of the silicon substrate 105. In this example, the first set of tails 170 extends out in a direction from the center 160 of the top surface 161 of the silicon chip 103 and beyond the first bond pad 120 and the second bond pad 121. The second set of tails 171 extends out in a direction from the center 160 of the top surface 161 of the silicon chip 103 and beyond the third bond pad 122 and the fourth bond pad 123. In a particular embodiment, the tails 170, 171 may be removed.

The example embodiment of FIGs. 1A-C also illustrates the silicon chip 103 including junctions 109 surrounding each resistor of the plurality of resistors. In the example of FIGs. 1A-C, the silicon chip 103 includes a field shield layer 108 to isolate an output signal of the semiconductor strain gauge 101 from external electrical fields. Furthermore, the apparatus 100 may include a glass substrate (not pictured) for coupling the silicon substrate 105 to a contact surface (not pictured). According to this embodiment, the glass substrate is not in contact with the plurality of resistors of the semiconductor strain gauge 101. Because the glass substrate is not in contact with the sensing part of the semiconductor strain gauge, this design may have the advantage of eliminating output drift of the strain gauge due to ionic contamination in the glass substrate during various high temperature tests (so-called P2 drift), which may be experienced in prior art designs that couple the glass substrate to the sensing elements of the semiconductor strain gauge.

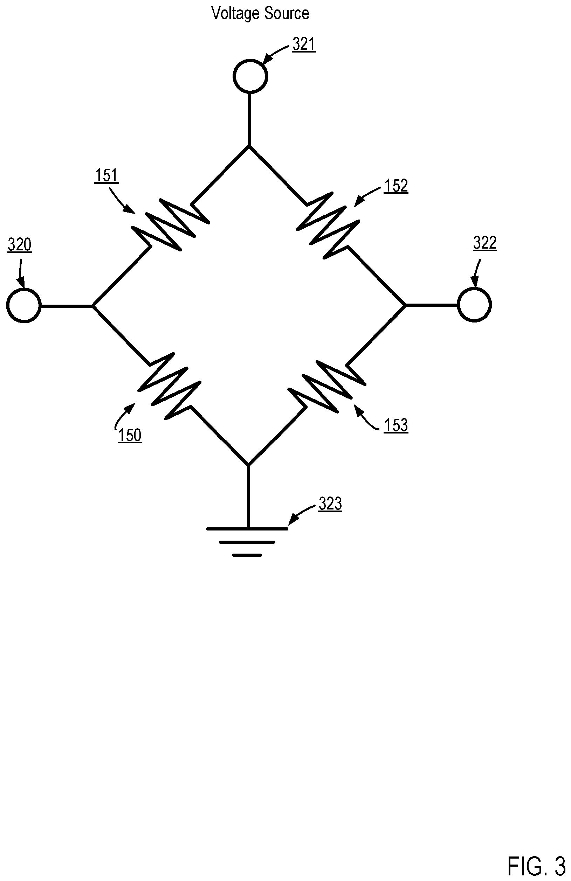

For further explanation, FIG. 3 illustrates a simplified circuit diagram of the junction-isolated semiconductor strain gauge 101 of FIG. 1A. As explained above, in the example of FIG. 1A, the resistors (150, 151, 152, 153) of the junction-isolated semiconductor strain gauge 101 form a first Wheatstone bridge. Those of ordinary skill in the electrical arts know that a Wheatstone bridge circuit has two input nodes and two output nodes. The output voltage of a Wheatstone bridge will change as the resistors' values change induced by pressure, temperature change, thermal mismatch, etc. In the example of FIG. 3, a voltage source may be applied to the bridge configuration circuit at a second terminal 321 along with a connection to ground at a fourth terminal 323. In a particular embodiment, the two outputs of the circuit at a first terminal 320 and a terminal lead 322 are proportionally corelated to the voltage variation of these resistors' resistance change.

In the example of FIG. 3, the voltage at the first terminal (320) and the third terminal (322) may form the output associated with the semiconductor strain gauge (101). In operation, the resistance of the semiconductor strain gauges (101) may change based on the amount of pressure on a diaphragm coupled to the semiconductor strain gauge (101). By measuring the voltage difference between the first terminal (320) and the third terminal (322), one can determine the resistance of the semiconductor strain gauge (101). It should be understood that FIG. 3 merely illustrates an example configuration of the circuitry and readers of skill in the art will realize that other configurations may be used.

The figures and designs disclosed offer multiple performance and cost-reduction benefits including the following
- The solder glass of the MSH sensor is no longer in contact with the sensing part of the silicon, which will eliminate the failure mode where ionic contamination in the glass causes output drift during various high temperature tests (so-called P2 drift).
- The design of the strain gauges can be minimized, which improves the mechanical performance, reduces the negative effects of thermal gradients, and reduces the package size capabilities.
- With minimized designs, it is much easier to increase the bridge resistance, which is critical for low-power applications.

The flowchart and block diagrams in the Figures illustrate the architecture, functionality, and operation of possible implementations of systems, apparatuses, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. An apparatus (100) comprising:
a silicon chip (103) that includes a silicon substrate (105) and a semiconductor strain gauge (101), **characterized by** the semiconductor strain gauge having a plurality of resistors (150, 151, 152, 153) formed by locally doping the silicon substrate (105) and biasing the silicon substrate (105) such that the resistors of the plurality of resistors are junction-isolated;
the silicon chip (103) further including a plurality of bond pads (120, 121, 122, 123) extending radially from a center point (160) on a top surface (161) of the silicon chip (103), wherein each adjacent pair of bond pads (120, 121, 122, 123) defines an area between them in which a respective resistor of the plurality of resistors (150, 151, 152, 153) is located;
wherein the resistors (150, 151, 152, 153) extend radially from a center point (160) on a top surface (161) of the silicon chip (103); and
wherein each of the plurality of resistors (150, 151, 152, 153) is electrically coupled to said adjacent pair of bond pads (120, 121, 122, 123) at a location proximate to the center point (160).

2. The apparatus of claim 1 wherein the plurality of resistors (150, 151, 152, 153) including a first resistor (150) electrically connected between a first bond pad (120) and a second bond pad (121); a second resistor (151) electrically connected between the second bond pad (121) and a third bond pad (122); a third resistor (152) electrically connected between the third bond pad (122) and a fourth bond pad (123); and a fourth resistor (153) electrically connected between the fourth bond pad (123) and the first bond pad (120).

3. The apparatus of claim 2 further comprising junctions (109) surrounding each resistor of the plurality of resistors (150, 151, 152, 153).

4. The apparatus of claim 2 wherein the silicon chip (103) further includes:
a first set of tails (170) formed from the silicon substrate (105), the first set of tails extending (170) out in a direction from the center point (160) on the top surface (161) of the silicon chip (103) and beyond the first bond pad (120) and the second bond pad (121); and
a second set of tails (171) formed from the silicon substrate (105), the second set of tails (171) extending out in a direction from the center point (160) of the top surface (161) of the silicon chip (103) and beyond the third bond pad (122) and the fourth bond pad (123).

5. The apparatus of claim 1 wherein each resistor of the plurality of resistors (150, 151, 152, 153) is a piezoresistive resistor.

6. The apparatus of claim 1 further comprising a glass substrate for coupling the silicon substrate (105) to a contact surface.

7. The apparatus of claim 6 wherein the glass substrate is not in contact with the plurality of resistors (150, 151, 152, 153).

8. The apparatus of claim 1 wherein the silicon substrate (105) is formed from a silicon wafer.

9. The apparatus of claim 1 further comprising a field shield layer (108) to isolate an output signal of the semiconductor strain gauge (101) from external electrical fields.

10. The apparatus of claim 1, the apparatus further comprising a diaphragm, wherein the silicon chip (103) is affixed to the diaphragm.

## Patentansprüche

1. Vorrichtung (100), umfassend:
einen Siliziumchip (103), der ein Siliziumsubstrat (105) und einen Halbleiter-Dehnungsmesser (101) beinhaltet, **dadurch gekennzeichnet, dass**
der Halbleiter-Dehnungsmesser eine Vielzahl von Widerständen (150, 151, 152, 153) aufweist, die durch lokales Dotieren des Siliziumsubstrats (105) und Vorspannen des Siliziumsubstrats (105) derart, dass die Widerstände der Vielzahl von Widerständen übergangsisoliert sind, ausgebildet ist;
der Siliziumchip (103) ferner eine Vielzahl von Bondkontaktstellen (120, 121, 122, 123) beinhaltet, die sich radial von einem Mittelpunkt (160) auf einer oberen Fläche (161) des Siliziumchips (103) erstreckt, wobei jedes benachbarte Paar von Bondkontaktstellen (120, 121, 122, 123) einen Bereich dazwischen definiert, in dem sich ein jeweiliger Widerstand der Vielzahl von Widerständen (150, 151, 152, 153) befindet;
wobei sich die Widerstände (150, 151, 152, 153) radial von einem Mittelpunkt (160) an einer oberen Fläche (161) des Siliziumchips (103) erstrecken; und
wobei jeder der Vielzahl von Widerständen (150, 151, 152, 153) an einer Stelle nahe dem Mittelpunkt (160) elektrisch an das benachbarte Paar von Bondkontaktstellen (120, 121, 122, 123) gekoppelt ist.

2. Vorrichtung nach Anspruch 1, wobei die Vielzahl von Widerständen (150, 151, 152, 153) einen ersten Widerstand (150), der elektrisch zwischen einer ersten Bondkontaktstelle (120) und einer zweiten Bondkontaktstelle (121) verbunden ist; einen zweiten Widerstand (151), der elektrisch zwischen der zweiten Bondkontaktstelle (121) und einer dritten Bondkontaktstelle (122) verbunden ist; einen dritten Widerstand (152), der elektrisch zwischen der dritten Bondkontaktstelle (122) und einer vierten Bondkontaktstelle (123) verbunden ist; und einen vierten Widerstand (153), der elektrisch zwischen der vierten Bondkontaktstelle (123) und der ersten Bondkontaktstelle (120) verbunden ist, beinhaltet.

3. Vorrichtung nach Anspruch 2, ferner umfassend Übergänge (109), die jeden Widerstand der Vielzahl von Widerständen (150, 151, 152, 153) umgeben.

4. Vorrichtung nach Anspruch 2, wobei der Siliziumchip (103) ferner Folgendes beinhaltet:
einen ersten Satz von Abgängen (170), der aus dem Siliziumsubstrat (105) ausgebildet ist, wobei sich der erste Satz von Abgängen (170) in einer Richtung von dem Mittelpunkt (160) auf der oberen Fläche (161) des Siliziumchips (103) und über die erste Kontaktstelle (120) und die zweite Kontaktstelle (121) hinaus erstreckt; und
einen zweiten Satz von Abgängen (171), der aus dem Siliziumsubstrat (105) ausgebildet ist, wobei sich der zweite Satz von Abgängen (171) in einer Richtung von dem Mittelpunkt (160) auf der oberen Fläche (161) des Siliziumchips (103) und über die dritte Kontaktstelle (122) und die vierte Kontaktstelle (123) hinaus erstreckt.

5. Vorrichtung nach Anspruch 1, wobei jeder Widerstand der Vielzahl von Widerständen (150, 151, 152, 153) ein piezoresistiver Widerstand ist.

6. Vorrichtung nach Anspruch 1, ferner umfassend ein Glassubstrat zum Koppeln des Siliziumsubstrats (105) an eine Kontaktfläche.

7. Vorrichtung nach Anspruch 6, wobei das Glassubstrat nicht mit der Vielzahl von Widerständen (150, 151, 152, 153) in Kontakt steht.

8. Vorrichtung nach Anspruch 1, wobei das Siliziumsubstrat (105) aus einem Siliziumwafer ausgebildet ist.

9. Vorrichtung nach Anspruch 1, ferner umfassend eine Feldschutzschicht (108), um ein Ausgangssignal des Halbleiter-Dehnungsmessers (101) von externen elektrischen Feldern zu isolieren.

10. Vorrichtung nach Anspruch 1, wobei die Vorrichtung ferner eine Membran umfasst, wobei der Siliziumchip (103) an der Membran befestigt ist.

## Revendications

1. Dispositif (100) comprenant :
une puce de silicium (103) qui comporte un substrat en silicium (105) et une jauge extensométrique à semi-conducteur (101), **caractérisée par**
la jauge extensométrique à semi-conducteur présentant une pluralité de résistances (150, 151, 152, 153) formées par dopage local du substrat en silicium (105) et polarisation du substrat en silicium (105) de sorte que les résistances de la pluralité de résistances soient isolées par jonction ;
la puce de silicium (103) comportant en outre une pluralité de plots de liaison (120, 121, 122, 123) s'étendant radialement à partir d'un point central (160) sur une surface supérieure (161) de la puce de silicium (103), chaque paire adjacente de plots de liaison (120, 121, 122, 123) définissant entre eux une zone dans laquelle se trouve une résistance respective de la pluralité de résistances (150, 151, 152, 153) ;
les résistances (150, 151, 152, 153) s'étendant radialement à partir d'un point central (160) sur une surface supérieure (161) de la puce de silicium (103) ; et
dans lequel chacune de la pluralité de résistances (150, 151, 152, 153) est électriquement couplée à la paire adjacente de plots de liaison (120, 121, 122, 123) dans un emplacement proche du point central (160).

2. Dispositif selon la revendication 1, dans lequel la pluralité de résistances (150, 151, 152, 153) comporte une première résistance (150) liée électriquement entre un premier plot de liaison (120) et un deuxième plot de liaison (121) ; une deuxième résistance (151) liée électriquement entre le deuxième plot de liaison (121) et un troisième plot de liaison (122) ; une troisième résistance (152) liée électriquement entre le troisième plot de liaison (122) et un quatrième plot de liaison (123) ; et une quatrième résistance (153) liée électriquement entre le quatrième plot de liaison (123) et le premier plot de liaison (120).

3. Dispositif selon la revendication 2, comprenant en outre des jonctions (109) entourant chaque résistance de la pluralité de résistances (150, 151, 152, 153).

4. Dispositif selon la revendication 2, dans lequel la puce de silicium (103) comporte en outre :
un premier ensemble de queues (170) formé à partir du substrat en silicium (105), le premier ensemble de queues (170) s'étendant dans une direction allant du point central (160) sur la surface supérieure (161) de la puce de silicium (103) et au-delà du premier plot de liaison (120) et du deuxième plot de liaison (121) ; et
un deuxième ensemble de queues (171) formé à partir du substrat en silicium (105), le deuxième ensemble de queues (171) s'étendant dans une direction allant du point central (160) de la surface supérieure (161) de la puce de silicium (103) et au-delà du troisième plot de liaison (122) et du quatrième plot de liaison (123).

5. Dispositif selon la revendication 1, dans lequel chaque résistance de la pluralité de résistances (150, 151, 152, 153) est une résistance piézorésistive.

6. Dispositif selon la revendication 1, comprenant en outre un substrat en verre destiné à coupler le substrat en silicium (105) à une surface de contact.

7. Dispositif selon la revendication 6, dans lequel le substrat en verre n'est pas en contact avec la pluralité de résistances (150, 151, 152, 153).

8. Dispositif selon la revendication 1, dans lequel le substrat en silicium (105) est formé à partir d'une plaquette de silicium.

9. Dispositif selon la revendication 1, comprenant en outre une couche de protection de champ (108) pour isoler un signal de sortie de la jauge extensométrique à semi-conducteur (101) des champs électriques externes.

10. Dispositif selon la revendication 1, dans lequel le dispositif comprend en outre un diaphragme, dans lequel la puce de silicium (103) est fixée sur le diaphragme.
